## Europäisches Patentamt
## European Patent Office
## Office européen des brevets

(19)

(11) Veröffentlichungsnummer: **0 056 785**
**B1**

(12) **EUROPÄISCHE PATENTSCHRIFT**

(45) Veröffentlichungstag der Patentschrift:
**08.05.85**

(51) Int. Cl.⁴: **A 21 C 9/04**, A 21 C 11/10

(21) Anmeldenummer: **82810009.9**

(22) Anmeldetag: **13.01.82**

(54) **Verfahren und Vorrichtung zur Steuerung eines Schneid- oder Stanz- und eines Abgabegerätes bei einer Maschine zum Verarbeiten von Teigbändern.**

(30) Priorität: **16.01.81 DE 3101303**

(43) Veröffentlichungstag der Anmeldung:
**28.07.82 Patentblatt 82/30**

(45) Bekanntmachung des Hinweises auf die Patenterteilung:
**08.05.85 Patentblatt 85/19**

(84) Benannte Vertragsstaaten:
**DE FR GB NL**

(56) Entgegenhaltungen:
**FR - A - 2 305 936**
**GB - A - 1 192 869**
**US - A - 3 633 517**

(73) Patentinhaber: **Seewer AG, Maschinenfabrik, Helmiswilstrasse 42, CH-3400 Burgdorf, Kanton Bern (CH)**

(72) Erfinder: **Jäger, Hans-Joachim, Koppigenstrasse 18, CH-3427 Utzenstorf (CH)**
Erfinder: **Egger, Peter, Riegenenstrasse 838, CH-3552 Bärau (CH)**

(74) Vertreter: **Tschudi, Lorenz et al, Bovard AG Patentanwälte VSP Optingenstrasse 16, CH-3000 Bern 25 (CH)**

BUNDESDRUCKEREI BERLIN

## Beschreibung

Die vorliegende Erfindung betrifft ein Verfahren zur Steuerung einer Maschine zur Verarbeitung eines Teigbandes, bei dem Füllgutportionen von einem örtlich fest angeordneten Abgabegerät im Abstand voneinander auf das von einem Förderband kontinuierlich transportierte Teigband abgesetzt werden, und bei dem von dem Teigband durch ein in örtlich festem Abstand hinter dem Abgabegerät angeordnetes Schneid- oder Stanzgerät jeweils mindestens eine Füllgutportion enthaltende Abschnitte abgeteilt werden, sowie eine Vorrichtung zur Durchführung des Verfahrens.

Bei bekannten Maschinen zum Verarbeiten von Teigbändern wird durch ein Abgabegerät in gewissen zeitlichen Abständen eine Füllgutportion auf das Teigband gegeben und nach einer gewissen Strecke das durch ein Förderband transportierte Teigband durch ein Schneidgerät jeweils zwischen zwei Füllgutportionen abgeschnitten. Falls das Abgabegerät sowie das Schneidgerät örtlich festbleiben, so muß beim Wechseln auf andere Bäckereierzeugnisse die zeitliche Beziehung zwischen Abgabe- und Schneidvorgang gegebenenfalls verändert werden. Bis dahin wurde jeweils festgestellt, ob der Schnitt am richtigen Ort erfolgte und wenn nicht, der Zeitpunkt des Abgabevorganges verschoben. Dies hatte den entscheidenden Nachteil, daß alle zwischen Abgabe- und Schneidgerät befindlichen Bäckereierzeugnisse verloren waren.

Aufgabe der vorliegenden Erfindung ist es, ein Verfahren sowie eine Vorrichtung zu schaffen, mit welchen der Ausschuß an Bäckereierzeugnissen minimalisiert werden kann. Dies wird erfindungsgemäß erreicht durch die kennzeichnenden Merkmale der unabhängigen Patentansprüche 1 und 3.

Im folgenden werden anhand der beiliegenden Zeichnung Ausführungsbeispiele der Erfindung sowie deren Verwendung näher beschrieben. Es zeigt

Fig. 1 einen schematischen Längsschnitt durch eine Maschine zum Verarbeiten von Teigbändern,

Fig. 2 und 3 eine Draufsicht auf das Teigband mit Abgabegerät und Schneidgerät in schematischer Darstellung, wobei in Fig. 2 das Abgabegut bezüglich Schnittstelle richtig und in Fig. 3 falsch liegt,

Fig. 4 ein erstes Ausführungsbeispiel einer Steuerschaltung zur Steuerung des Schneid- und Abgabegerätes,

Fig. 5 ein zweites Ausführungsbeispiel einer Steuerschaltung,

Fig. 6 eine schematische Darstellung der Steuervorrichtung.

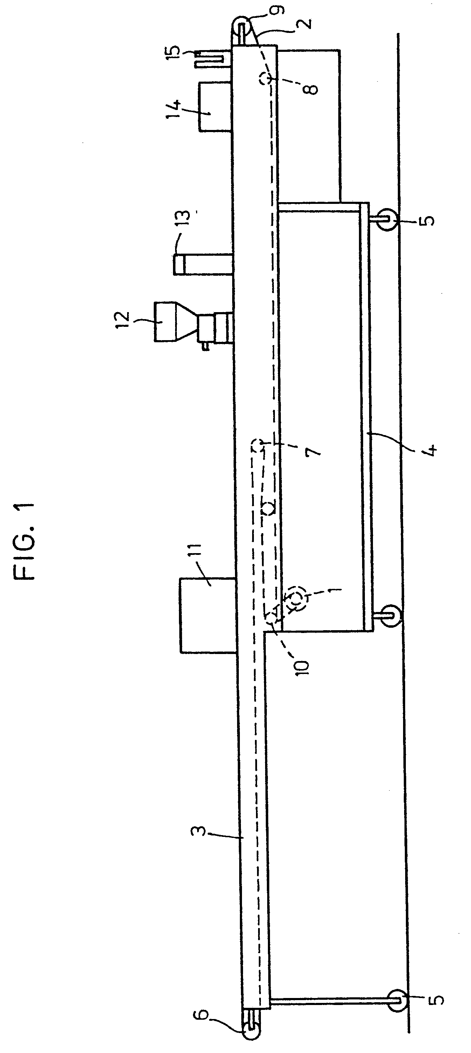

In Fig. 1 ist eine bekannte Maschine zum Verarbeiten von Teigbändern im Längsschnitt dargestellt. Ein von einem Motor 1 angetriebenes Förderband 2 wird über ein Tischblatt 3 geführt. Das Tischblatt 3 ist auf einem Maschinengestell 4

gelagert. Unten am Gestell 4 befinden sich Rollen 5 zum Verschieben der Maschine. Das Förderband 2 wird über Umlenkrollen 6, 7, 8 und 9 geführt und von einer Antriebsrolle 10 angetrieben. Auf dem Tischblatt 3 sind verschiedene Geräte, die zur Fabrikation der Bäckereierzeugnisse verwendet werden, angeordnet. In der Reihenfolge von links nach rechts gemäß Fig. 1 handelt es sich um ein Schneid- oder Stanzgerät 11, ein Gerät 12 zur Abgabe von Füllmasse, ein Benetzungsgerät 13, eine Mehlbürste 14 sowie einen Träger 15 für eine Teigbandhaspel. Die Einzelteile der Maschine zum Verarbeiten von Teigbändern sind nur schematisch dargestellt, da die Maschine zum Stand der Technik gehört. Wesentlich für die vorliegende Erfindung sind das Schneidgerät 11, auch Guillotine genannt, sowie das Abgabegerät 12.

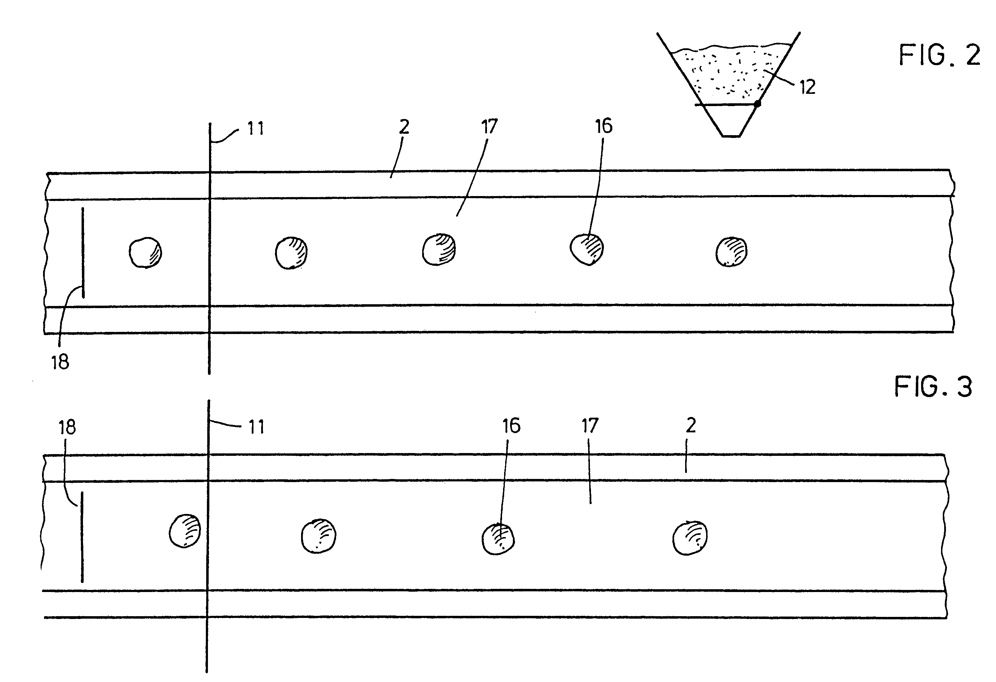

In den Fig. 2 und 3 ist schematisch das Förderband 2 sowie das Schneid- oder Stanzgerät 11 und das Abgabegerät 12 dargestellt. Mit dem Abgabegerät 12 werden in bestimmten Abständen Füllportionen oder Tupfer 16 auf ein Teigband 17 aufgebracht, was z. B. zur Herstellung von Nußgipfeln dienen kann. Mit dem Schneidgerät wird das Teigband 17 in regelmäßige Stücke unterteilt, wobei im allgemeinen ebenso viele Schnitte ausgeführt wie Portionen 16 auf das Teigband 17 aufgebracht werden. Wenn das Schneidgerät 11 und das Abgabegerät 12 als örtlich fest angesehen werden, so muß bei Änderung des herzustellenden Bäckereierzeugnisses die zeitliche Beziehung zwischen Teigschnitt und Füllgutabgabe verändert werden, so daß der Schnitt räumlich gesehen richtig zwischen zwei auf das Teigband 17 aufgebrachte Füllportionen 16 zu liegen kommt.

In Fig. 2 wird der Schnitt 18 im Teigband an der richtigen, in Fig. 3 an der falschen Stelle ausgeführt. Bei den bekannten Maschinen zur Verarbeitung von Teigbändern wurde, falls der Schnitt 18 am falschen Ort erfolgte, der Zeitpunkt der Abgabe der Füllportion 16 auf das Teigband 17 in bezug auf den Zeitpunkt der Schneidbewegung verändert. Dies hatte den Nachteil, daß alle Bäckereierzeugnisse, die zwischen dem Abgabegerät und dem Schneidgerät lagen, als Ausschußprodukte zu betrachten waren. Beim Verfahren resp. der Vorrichtung gemäß einem Ausführungsbeispiel der Erfindung nun wird von einem gegebenen Zeitpunkt des Auftrages der Füllportion ausgegangen und der Zeitpunkt der Schneidbewegung verändert, so daß für den Fall, daß die Einstellung nicht stimmen sollte, nur ein Bäckereierzeugnis verloren geht.

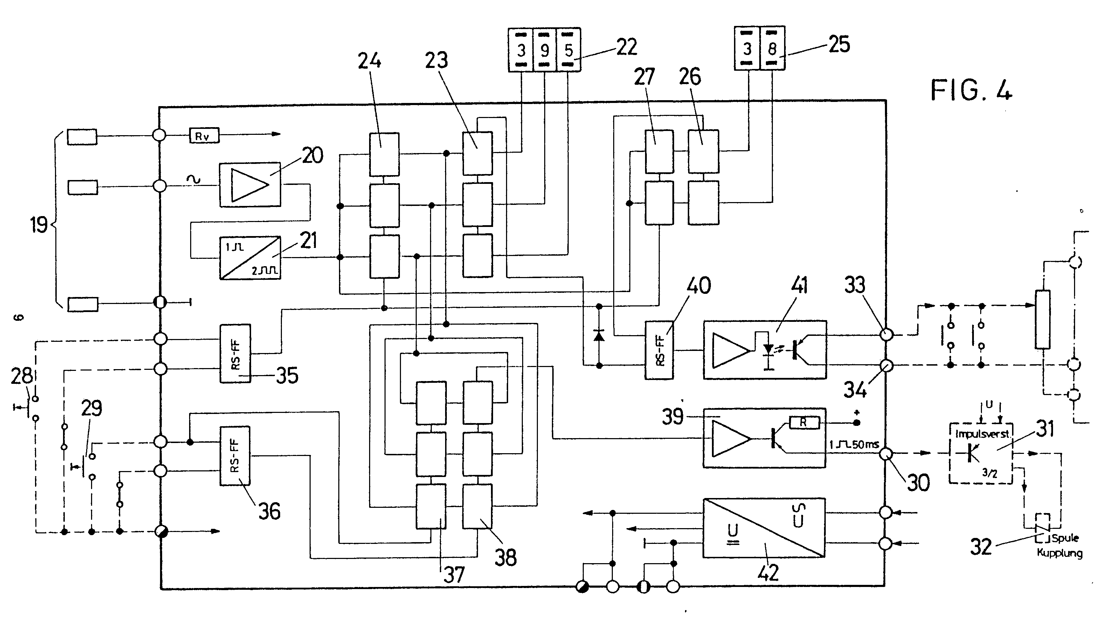

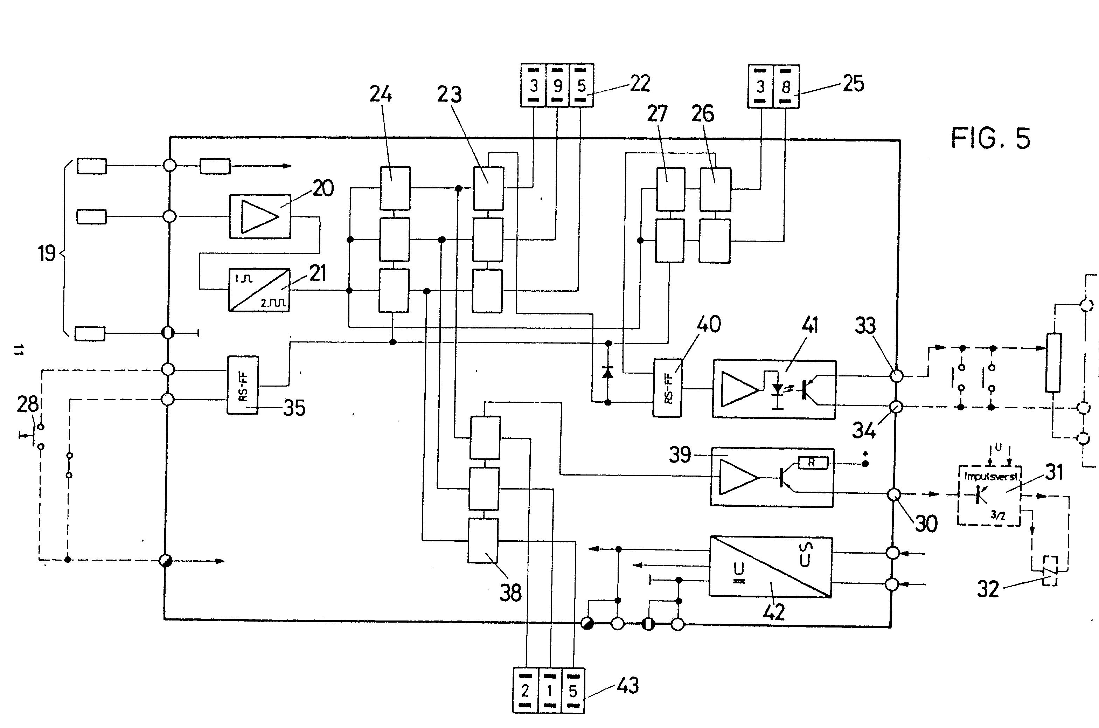

In den Fig. 4 und 5 sind zwei Blockschaltbilder von Steuerschaltungen zur Steuerung des Abgabe- und Schneidgerätes dargestellt. Ein Drehimpulsgeber 19 am Transportbandantrieb liefert pro 2 mm Bandvorschub einen Impuls. Das Signal wird durch einen Eingangsverstärker 20 verstärkt und einem Frequenzverdoppler zugeführt, so daß pro 1 mm Bandvorschub ein Impuls auftritt. Die Schnittlänge resp. die Aufteilung der Füllportionen werden an einem Vorwahlschalter 22 eingestellt. So z. B. bedeuten 395 am Vorwahlschalter 395 mm Schnittlänge resp. Distanz zwischen zwei Füllportionen. Der Vorwahlschalter ist über Vergleichsschaltungen 23 mit Zählern 24 verbunden. Die Länge des Füllgutes auf dem Teigband wird an einem Füllgutschalter 25 eingestellt. Bei Veränderung der Schaltereinstellung wird die Zeit, während welcher das Abgabegerät 12 Füllgut auf das Teigband 17 abgibt, verändert. Der Schalter 25 ist über Vergleichsschaltungen 26 mit Zählern 27 verbunden. Mit einer Taste 28 wird der Beginn der Abgabe von Füllportionen bei laufendem Transportband bestimmt. Mit einer Taste 29 für das Schneidgerät wird dieses in bezug auf das Abgabegerät in Betrieb gesetzt. Von einer Ausgangsklemme 30 wird ein Signal zur Steuerung des Schneidgerätes über einen Impulsverstärker 31 einer Kupplungsspule 32 des Schneidgerätes zugeführt. An den Ausgangsklemmen 33 und 34 wird das Ausgangssignal zur Steuerung des Abfüllgerätes entnommen.

Die Anschlüsse der Taste 28 und 29 sind mit Rückstell-Flip-Flops 35 und 36 verbunden. Ein Eingang des Flip-Flops 36 ist mit Registern 37 und der Ausgang mit Vergleichsschaltungen 38 verbunden. Das zur Steuerung des Schneidgerätes benötigte Signal wird über einen Ausgangsverstärker mit Monoflop 39 an die Anschlußklemme 30 geführt. Die Vergleichsschaltungen 23 und 26 sind über ein weiteres Rückstell-Flip-Flop 40 mit einem Verstärker mit Optokoppler 41 verbunden. Eine Gleichrichterschaltung 42 dient zur Stromversorgung der Steuerschaltung.

Beim Ausführungsbeispiel der Steuerschaltung gemäß Fig. 5 wird im Gegensatz zum Ausführungsbeispiel gemäß Fig. 4 zum Verschieben des Zeitpunktes der Schneidbewegung in bezug auf den Zeitpunkt der Abgabe von Füllgut ein Vorwahlschalter 43 verwendet.

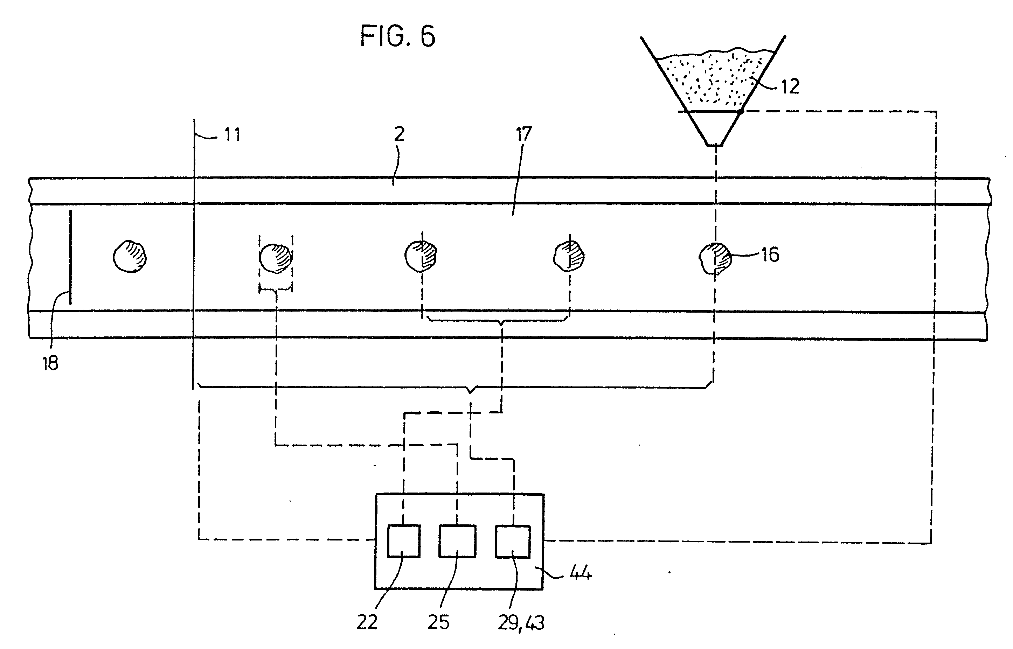

In Fig. 6 ist die Steuervorrichtung 44 in ihrer Wirkungsweise auf Schneid- und Abgabegerät schematisch dargestellt.

**Patentansprüche**

1. Verfahren zur Steuerung einer Maschine zur Verarbeitung eines Teigbandes (17), bei dem Füllgutportionen (16) von einem örtlich fest angeordneten Abgabegerät (12) im Abstand voneinander auf das von einem Förderband (2) kontinuierlich transportierte Teigband (17) abgesetzt werden, und bei dem von dem Teigband (17) durch ein in örtlich festem Abstand hinter dem Abgabegerät (12) angeordnetes Schneid- oder Stanzgerät (11) jeweils mindestens eine Füllgutportion (16) enthaltende Abschnitte abgeteilt werden, dadurch gekennzeichnet, daß der Vorschub des Teigbandes gemessen wird, daß der Abstand der nacheinander durch das Abgabegerät (12) auf das Teigband (17) abgegebenen Füllgutportionen sowie die Zeitdauer der Abgabe vorgegeben werden, und daß der Schneid- bzw. Stanzvorgang jeweils nach einer vorgewählten transportierten Teigbandlänge nach einer bestimmten Phase des Abgabevorganges ausgelöst wird.

2. Verfahren nach Patentanspruch 1, dadurch gekennzeichnet, daß die Abgabelänge und die vorwählbare transportierte Teigbandlänge proportional zur Impulszahl eines Drehimpulsgebers (19) sind.

3. Vorrichtung zur Durchführung des Verfahrens nach Patentanspruch 1 oder 2 mit einem örtlich fest angeordneten Abgabegerät (12) zur Abgabe von Füllgutportionen auf ein Teigband (17) und einem in örtlich festem Abstand zum Abgabegerät (12) angeordneten Schneid- oder Stanzgerät (11), gekennzeichnet durch erste Mittel (19) zum Erfassen des Vorschubs des Teigbandes, durch zweite Mittel (22) zum Einstellen des räumlichen Abstandes von aufeinanderfolgenden, durch das Abgabegerät (12) auf das Teigband (17) abgegebenen Füllgutportionen, durch dritte Mittel (25) zum Einstellen der Zeitdauer des Abgabevorganges, durch vierte Mittel (28) zum Einstellen des Beginnes der Abgabe von Füllgutportionen sowie durch fünfte Mittel (29, 43) zum Einstellen der Phasendifferenz zwischen Abgabevorgang und Schneid- oder Stanzvorgang.

4. Vorrichtung nach Patentanspruch 3, dadurch gekennzeichnet, daß das erste Mittel (19) als Drehimpulsgeber, das zweite Mittel (22) als Vorwahlschalter, das dritte Mittel (25) als Füllgutschalter, das vierte Mittel (28) als Taste und das fünfte Mittel (29, 43) als Taste oder Vorwahlschalter ausgebildet ist.

**Claims**

1. Process for controlling a machine for processing a strip of dough (17), wherein portions (16) of filling material are deposited from a stationary dispensing apparatus (12) at spaced intervals on the strip of dough (17) continuously transported by a conveyor belt (2), and wherein sections containing at least one portion (16) of filling material each are divided off from the strip of dough (17) by a cutting or punching apparatus (11) disposed at a fixed distance behind the dispensing apparatus (12), characterized in that the feed of the strip of dough is measured, that the spacing of the portions of filling material successively dispensed by the dispensing apparatus (12) onto the strip of dough (17), as well as the duration of the dispensing, are predetermined, and that the cutting or punching operation is triggered each time after a preselected transported length of dough-strip after a certain phase of the dispensing operation.

2. Process according to patent claim 1, characterized in that the dispensing length and the preselectable transported length of dough-strip are proportional to the pulse count of a rotary pulse generator (19).

3. Device for carrying out the process according to patent claim 1 or 2 having a stationary dispensing apparatus (12) for dispensing portions of filling material onto a strip of dough (17) and a cutting or punching apparatus (11) disposed at a fixed distance from the dispensing apparatus (12), characterized by first means (19) for detecting the feed of the strip of dough, by second means (22) for adjusting the spacing of successive portions of filling material dispensed by the dispensing apparatus (12) onto the strip of dough (17), by third means (25) for adjusting the duration of the dispensing operation, by fourth means (28) for adjusting the beginning of the dispensing of portions of filling material, as well as by fifth means (29, 43) for adjusting the phase difference between the dispensing operation and the cutting or punching operation.

4. Device according to patent claim 3, characterized in that the first means (19) is formed as a rotary pulse generator, the second means (22) as a preselection switch, the third means (25) as a filling-material switch, the fourth means (28) as a key, and the fifth means (29, 43) as a key or preselection switch.

## Revendications

1. Procédé de commande d'une machine pour le traitement d'une bande de pâte (17), dans laquelle des portions de masse de remplissage (16) sont déposées à distance l'une de l'autre, par un appareil de délivrance disposé de façon fixe (12), sur une bande de pâte (17) continuellement transportée par une bande transporteuse (2), et dans laquelle des tronçons de bande de pâte contenant chaque fois au moins une portion de masse de remplissage (16), sont coupés dans la bande de pâte (17) par un appareil (11) de découpage ou de découpe par étampage fixement positionné à une certaine distance derrière l'appareil de délivrance (12), caractérisé en ce que l'avance de la bande de pâte est mesurée, en ce que la distance entre les portions de masse de remplissage délivrées l'une après l'autre sur la bande de pâte (17) par l'appareil de délivrance (12), de même que la durée de la délivrance, sont prescrites, et en ce que le processus de découpage ou découpe par étampage intervient chaque fois après qu'une longueur présélectionnée de bande de pâte a été transportée depuis une phase déterminée du processus de délivrance.

2. Procédé selon la revendication 1, caractérisé en ce que la longueur de délivrance et la longueur présélectionnée de bande de pâte transportée sont proportionnelles au nombre d'impulsions d'un donneur d'impulsions rotatif.

3. Dispositif pour la mise en œuvre du procédé selon la revendication 1 ou 2, comprenant un appareil de délivrance de portions de masse de remplissage (12) sur une bande de pâte (17), disposé de façon fixe, et un appareil de découpage ou de découpe par étampage (11) positionné à une distance fixe de l'appareil de délivrance (12), caractérisé par des premiers moyens (19) pour saisir la mesure de l'avance de la bande de pâte, des deuxièmes moyens (22) pour établir la distance spatiale des portions de masse de remplissage successives déposées par l'appareil de délivrance (12) sur la bande de pâte (17), des troisièmes moyens (25) pour établir la durée du processus de délivrance, des quatrièmes moyens (28) pour établir le début de la délivrance des portions de masse de remplissage, et des cinquièmes moyens (29, 43) pour établir la différence de phase entre le processus de délivrance et le processus de découpage ou découpe par étampage.

4. Dispositif selon la revendication 3, caractérisé en ce que les premiers moyens (19) sont formés en tant que donneur d'impulsions rotatif, les deuxièmes moyens (22) sont formés en tant que commutateur de présélection, les troisièmes moyens (25) sont formés en tant que commutateur de pleine quantité de remplissage, les quatrièmes moyens (28) sont formés en tant que touche, et les cinquièmes moyens (29, 43) sont formés en tant que touche ou que commutateur de présélection.

# FIG. 1

FIG. 2

FIG. 3

FIG. 4

0 056 785

FIG. 5

FIG. 6

11   2   17   12

16

18

44

22   25   29,43